Europäisches Patentamt

European Patent Office

Office européen des brevets

(19)

(11) Publication number: **0 107 260**
**A1**

(12) **EUROPEAN PATENT APPLICATION**

(21) Application number: **83201525.9**

(22) Date of filing: **25.10.83**

(51) Int. Cl.³: **C 08 L 97/02,** C 08 L 61/24,
C 08 L 61/30, C 09 J 3/00

(30) Priority: **27.10.82 NL 8204144**

(43) Date of publication of application: **02.05.84**
**Bulletin 84/18**

(84) Designated Contracting States: **AT BE CH DE FR GB IT
LI NL SE**

(71) Applicant: **METHANOL CHEMIE NEDERLAND V.o.F.,
P.O. Box 57 Rijksstraatweg 32, NL-9750 AB Haren (NL)**
Applicant: **STAMICARBON B.V., Postbus 10, NL-6160 MC
Geleen (NL)**

(72) Inventor: **Tinkelenberg, Arie, Vriendenkringstraat 40,
NL-6141 LJ Limbricht (NL)**
Inventor: **Vaessen, Henricus Wilhelmus L. M., Pater
Eberswelhlerstraat 4, NL-6363 AL Wijnandsrade (NL)**
Inventor: **Dirix, Jozef Gerardus Johannes,
Stationsstraat 62a, NL-6361 BH Nuth (NL)**

(74) Representative: **Leherte, Georges Maurice Lucien Marie
et al, Octrooibureau DSM P.O.Box 9, NL-6160 MA Geleen
(NL)**

(54) **Manufacture of chipboard.**

(57) Process of manufacturing sheets by providing particulate cellulose-containing material with a catalyst-containing, possibly melamine-modified urea-formaldehyde resin as a binder and pressing it into a sheet at elevated temperature and increased pressure, in which the binder has a molar formaldehyde-to-amino-groups ratio ($F/NH_2$) between 0.25 and 0.625 and the catalyst comprises a mixture of a latent catalyst and a strong acid in an effective amount.

EP 0 107 260 A1

-1-

## MANUFACTURE OF CHIPBOARD

The invention relates to the manufacture of sheets by compressing particulate cellulose-containing material into a sheet at elevated temperature and increased pressure using an aminoplast resin as binder, in particular to the manufacture of chipboard from wood chips.

It is known that the formaldehyde emission of the sheets can be reduced by using as binder a urea-formaldehyde resin or melamine-urea-formaldehyde resin with a low molar ratio between the formaldehyde and the amino groups present.

In order to increase the strength of the sheets a melamine-containing resin is used and/or a polyisocyanate is added as additional binder. In the latter case, when larger quantities of polyisocyanate are used there is the danger of the sheets adhering to the pressing plates. For smooth operation under all conditions, the polyisocyanate content should preferably be less than 2 per cent by weight, referred to dry chips. At relatively long pressing times, this is well possible.

Applicant has found, however, that with a faster-setting system, for example one suitable for pressing times of 7-10 s/mm, at a pressing temperature of 180 °C, the polyisocyanate content should be at least 1 per cent by weight and preferably 2 per cent by weight or more in order to obtain sheets which have a good strength, even under humid conditions.

The aim of the invention is to provide a binder system with which a sheet of sufficient strength and a low formaldehyde emission level can be made at a short pressing time, which system contains little or no polyisocyanate.

According to the invention a sheet is obtained by providing particulate cellulose-containing material with a catalyst-containing, optionally melamine-modified urea-formaldehyde resin, compressing it into a sheet at elevated temperature and increased pressure, the molar ratio of formaldehyde to amino groups in the resin being between 0.25 and 0.625 and the catalyst comprising a mixture of a latent catalyst and a strong acid in an effective amount.

With the process of the invention, the aim set can indeed be achieved. When a mixture of a polyisocyanate and a urea-melamine-formaldehyde resin is used as a binder, the co-use of a strong acid as a catalyst is found to enable a reduction of the pressing time to less than 8 s/mm, yet less than 2 per cent by weight, in most cases even less than 1 per cent by weight of polyisocyanate is required to achieve the desired strength.

In systems in which only a urea-formaldehyde resin, optionally modified with melamine, is used as the binder, the addition of a strong acid gives, besides the higher reactivity, a sheet with better swell properties and equivalent or better strength. In all cases, the level of formaldehyde emission remains the same or even decreases.

According to one particular mode of realisation, as a binder a combination of a polyisocyanate and a, preferably melamine-modified, urea-formaldehyde resin is used.

The molar ratio between formaldehyde and amino groups ('F/NH$_2$') is here between 0.25 and 0.625, preferably between 0.4 and 0.55. The melamine content may be up to 70 per cent by.weight, relative to the total quantity of urea and melamine, and is preferably between 25 and 70 per cent by weight, more in particular between 40 and 60 per cent by weight. Similar systems have been described in European Patent Application No. EP-0,025,245 A. As a catalyst, a combination of a known latent catalyst such as ammonium chloride or ammonium sulphate and a strong acid is used. The quantity of latent catalyst is generally between 1 and 3 per cent by weight, relative to the resin solids. The quantity of strong acid is generally at least 20 milliequivalents of acid per 100 grams of resin. Preferably, between 20 and 80 meqs are used per 100 grams of resin, more in particular between 35 and 65 meqs per 100 grams of resin. The quantity of strong acid is generally such that the pressing time, at a pressing temperature of 180 °C, can be reduced to 10 seconds/mm thickness or less, preferably to 8 seconds or less, without too great a reduction in 'pot-life' of the catalysed system.

The amount of resin applied to the chips is generally 6-14 per cent by weight of resin solids relative to the dry chips, and preferably 8-12 per cent by weight. The quantity of polyisocyanate is preferably less than 2 per cent by weight relative to dry chips, notably between 0.1 and 2 per cent by weight, and more in particular between 0.3 and 1.5 per cent by weight.

As acid, generally organic or inorganic acids are used with a strength equal to or greater than that of formic acid.

The expression strong acid as used herein also comprises acid salts, and acid reacting salts, i.e. salts of a strong acid and a weak base. Examples are formic acid, trichloracetic acid, oxalic acid, citric acid, toluene sulphonic acid, hydrochloric acid, sulphuric acid and phosphoric acid. Where possible, formic acid is used, in particular with resins containing much melamine.

Further, in a large number of cases also sulphuric acid can be used, especially with resins containing little melamine.

The main object of the above-described mode of realisation is the manufacture of weather-resistant sheets.

Another mode of realisation is mainly for application in the manufacture of sheets for use in an environment of low humidity. Here, a resin is used which contains between 1 and 10 per cent by weight of melamine and has a $F/NH_2$ ratio of between 0.425 and 0.625. Preferably, the melamine content is between 2 and 8 per cent by weight and the $F/NH_2$ ratio between 0.45 and 0.55.

The adhesive content may be between 6 and 15 per cent by weight relative to the dry chips, and is preferably between 8 and 12 per cent by weight. As strong acid, sulphuric acid is preferably used here. The amount of latent catalyst is generally between 1.0 and 3 per cent by weight referred to the resin solids. The amount of acid is generally between 10 and 70 meqs per 100 grams of resin. The higher the melamine content, the greater the amount of strong acid may be.

Besides the modes of realisation described, also other binders may be used, for example a urea-melamine-formaldehyde resin with a high melamine content catalysed with latent catalyst and a strong acid.

For the sake of the stability of the resin solution, normally first the amount of latent catalyst will be increased and only then will it be determined, by manual tests, what the amount of strong acid is which gives a favourable balance of reactivity, pot-life of the adhesive and strength of the sheet. When efficient mixing and spraying equipment is used, a pot-life of two hours or more for the catalysed resin solution is acceptable.

Besides the binder, the known admixtures may be added, such as moisture repellants, fungicides, anti-foaming agents etc.

Generally, pressing is carried out at a temperature of between 140 and 220 °C and at a pressure of up to 3.5 $N/mm^2$.

The process according to the invention will be explained by the following examples without being restricted to the modes of realisation described therein.

Example I

Urea-melamine-formaldehyde adhesive resin solutions were prepared from the following components:

a) A melamine formaldehyde resin solution obtained in the usual manner by condensation at 95-98 °C, with a molar formaldehyde to melamine ratio of 1.65.

b) A commercially available urea-formaldehyde resin solution with a molar formaldehyde to urea ratio of 1.25 (the commercial product UF-6 SGA of Methanol Chemie Nederland).

c) Urea.

By mixing components (a), (b) and (c), adhesive resin solutions were prepared having an effective molar $F/NH_2$ ratio of 0.45, and a melamine to urea weight ratio of 1:1. Using these adhesive solutions and diphenylmethanediisocyanate (MDI) as binder, chipboards were manufactured, for the rest in the usual manner. The UMF adhesive solutions were mixed with a standard catalyst (2 % ammonium chloride relative to the resin solids weight) and, depending on the desired reactivity, different amounts of 4 M hydrochloric acid.

Further, a moisture repellant was added (0.6 % Mobilcer paraffin emulsion, relative to the dry chip weight), and the adhesives were diluted with water down to a viscosity suitable for spraying. The isocyanate was emulsified in the adhesive solution in the desired quantity, after which the mixture was sprayed on the chips.

The chipboard was manufactured by spraying dust-free wood chips (70 % wt. fir, 30 % wt. beech) with the binders in a suitable mixer and then strewing them into a mat, which at a pressing temperature of 180 °C, a maximum compressing force of 3.4 $N/mm^2$ and a pressing time of 8 seconds per mm sheet thickness was compressed into sheets of 40 x 40 cm, with a thickness of 16 mm and a density of about 700 $kg/m^3$.

The tensile strength of the sheets normal to the sheet surface after submersion for 2 hours in boiling water (V-100 tensile strength) was measured in accordance with DIN 68763.

The formaldehyde emission of the sheets was determined in accordance with modified DSM/WKI (Roffael) method. In this method, a chipboard sample is suspended over a saturated solution of common salt in a well sealed bottle at a temperature of 40 °C. The salt solution is renewed at subsequent intervals of 96 and 72 hours.

The quantity of formaldehyde absorbed into the salt solutions during the second (72-hour) cycle is determined and expressed in mg of formaldehyde per $m^2$ of chipboard. The composition of the adhesives, the quantity of binder used, relative to the dry ('atro') chip material, and the strength and the formaldehyde emission of the chipboard sheets have been summarized in Table I, series I.

Table I

| test series | UMF molar ratio $F/NH_2$ | accelerator system, % rel. to solid UMF NH$_4$Cl | 4N HCl | adhesive content wt.% UMF | wt.% MDI | tensile strength V-100 N/mm$^2$ | Q-24 % | F-emission (DSM/Roffael) mg F/m$^2$ x 72 h |
|---|---|---|---|---|---|---|---|---|
| I-1 | 0.45 | 2 | 3.8 | 7 | 2 | 0.34 | 7.0 | 90 |
| 2 | " | " | " | 9 | 1 | 0.33 | 7.3 | 80 |
| 3 | " | " | " | 11 | 0.5 | 0.32 | 7.3 | 75 |
| 4 | " | " | 15.4 | 7 | 2 | 0.29 | 7.1 | 65 |
| 5 | " | " | " | 9 | 1 | 0.32 | 6.9 | 60 |
| 6 | " | " | " | 11 | 0.5 | 0.36 | 6.2 | 60 |
| II-7* | 0.45 | 2 | - | 7 | 2 | 0.33 | 6.6 | 120 |
| 8* | " | " | - | 9 | 1 | 0.30 | 7.5 | 110 |
| 9* | " | " | - | 11 | 0.5 | 0.18 | 9.0 | 110 |
| III** | | | | | | | | |
| -10* | 0.65 | 1.5 | - | 13 | - | 0.33 | 6.8 | 800 |
| 11* | " | 3 | - | 13 | - | 0.34 | 5.5 | 700 |
| 12* | " | 1.5 | 2.5 | 13 | - | 0.33 | 6.2 | 800 |

* not according to the invention.
** UMF adhesive obtained by mixing of MF-resin (a), UF-resin (b) and a small amount of formaldehyde.

Q-24 is the swell after storage for 24 hours under water at 20 °C, expressed as a percentage of the original thickness.

## Example II (comparative example)

For the purpose of comparison, chipboard sheets were made with the same adhesive system as in Example I, except that no acid was added but only the standard accelerator was used (Table I, series II). At a low MDI content only a moderate V-100 tensile strength is achieved. Moreover, the formaldehyde emission is considerably higher when no acid is added than in the examples of series I.

At a higher molar ratio (F/NH$_2$ = 0.65; series III) addition of acid does give increased reactivity (which indeed can be achieved here also by addition of more NH$_4$Cl), but does not lead to improved mechanical quality, not even after the resin has fully set.

## Example III

By mixing components (a), (b) and (c), as given in Example I, a melamine-modified UF adhesive was prepared having an effective molar ratio F/NH$_2$ of 0.50 and a melamine content of 7.7 % relative to resin solids.

Using this adhesive solution, chipboard sheets were pressed in the usual manner, using as the accelerator system standard catalyst (1.5 % NH$_4$Cl, referred to dry resin) and chlorhydric acid. Production data, dry tensile strength (V-20) and formaldehyde emission are summarised in Table II.

Table II

| test series | UMF molar ratio $F/NH_2$ | accelerator system % rel. to resin solids | | adhesive content wt.% rel. to chips | pressing time sec/mm 180 °C | tensile strength V-20 $(N/mm^2)$ | Q-24 % | F-emission (DSM/Roffael) mg $F/m^2$ 72 h |
|---|---|---|---|---|---|---|---|---|
| | | NH₄Cl | 4NHCl | | | | | |
| 14* | 0.50 | 1.5 | – | 9 | 13 | 0.18 | – | – |
| 15* | " | " | – | " | 17 | 0.43 | 16.1 | 105 |
| 16 | 0.50 | 1.5 | 7.5 | 9 | 10 | 0.33 | – | – |
| 17 | " | " | " | " | 13 | 0.53 | 11.6 | – |
| 18 | " | " | " | " | 17 | 0.54 | 12.5 | 104 |

\* not according to the invention.

## Example IV

Using the same binder system as in example I.3 (UMF adhesive solution with molar $F/NH_2$ ratio of 0.45, and MDI) chipboards were made, applying as catalyst a standard catalyst (NH₄Cl) and formic acid. The composition of the adhesive system, the quantity of binder used relative to dry ('atro') chip material and the strength and formaldehyde emission of the chipboard sheet are summarised in Table III.

Table III

| test series | UMF molar ratio $F/NH_2$ | accelerator system, % rel. to solid UMF | | adhesive content wt.% | | tensile strength V-100 $N/mm^2$ | Q-24 % | F-emission (DSM/Roffael) mg $F/m^2$ x 72 h |
|---|---|---|---|---|---|---|---|---|
| | | NH₄Cl | 4N HCl | wt.% UMF | wt.% MDI | | | |
| IV | 0.45 | 2 | 12 | 11 | 0.5 | 0.34 | 7.0 | 55 |

## CLAIMS

1. Process of manufacturing sheets by providing particulate cellulose-containing material with a catalyst-containing, possibly melamine-modified urea-formaldehyde resin as a binder and pressing it into a sheet at elevated temperature and increased pressure, the process being characterized in that in the binder the molar formaldehyde-to-amino-groups ratio ($F/NH_2$) is between 0.25 and 0.625 and the catalyst comprises a mixture of a latent catalyst and a strong acid in an effective amount.

2. Process according to claim 1, characterized in that the amount of acid is sufficient to increase the reactivity to such an extent that the setting process can be completed at a pressing temperature of 180 °C in a period of 10 seconds or less per mm sheet thickness.

3. Process according to claim 1-2, characterized in that the binder comprises a combination of a polyisocyanate, in an amount of between 0.1 and 2.0 per cent by weight relative to the dry chips, with a urea-melamine-formaldehyde resin containing 25-70 per cent by weight of melamine, relative to melamine plus urea, and applied in an amount of between 6 and 14 per cent by weight, relative to the dry chips.

4. Process according to claim 3, characterized in that the amount of melamine is between 40 and 60 per cent by weight, the polyisocyanate content between 0.3 and 1.5 per cent by weight and the aminoplast resin content between 8 and 12 per cent by weight relative to dry chips, with a mixture of 1-3 per cent by weight of latent catalyst, relative to the resin, and strong acid in an amount of 20-80 meq/100 g resin as a catalyst.

5. Process according to claims 3-4, characterized in that the amount of strong acid is between 35 and 65 meq/100 g resin.

6. Process according to claims 3-5, characterized in that the acid is formic acid.

7. Process according to claims 3-6, characterized in that the $F/NH_2$ ratio is between 0.40 and 0.55.

8. Process according to claims 1-2, characterized in that as the sole bonding agent a urea-melamine-formaldehyde resin with a melamine content of 1-10 per cent by weight and a $F/NH_2$ ratio of 0.425 to 0.625 is used in an amount of 6-15 per cent by weight relative to the dry chips, with 1-3 per cent by weight, relative to the resin, of latent catalyst and 10-70 meq/100 g resin of strong acid.

9. Process according to claim 8, characterized in that the melamine content is between 2 and 8 per cent by weight, the $F/NH_2$ ratio is between 0.45 ad 0.55 and the amount of strong acid is between 20 and 50 meq/100 g resin.

10. Process according to claims 8-9, characterized in that the acid is sulphuric acid.

0107260

European Patent
Office

**EUROPEAN SEARCH REPORT**

Application number

EP 83 20 1525

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,Y | EP-A-0 025 245 (METHANOL CHEMIE NEDERLAND STAMICARBON) * Examples 1,2; claims * | 1,3,4, 7-9 | C 08 L 97/02 C 08 L 61/24 C 08 L 61/30 C 09 J 3/00 |
| Y | CHEMICAL ABSTRACTS, vol. 88, no. 2, 9th January 1978, page 43, no. 7976y, Columbus, Ohio, US & PL - A - 85 670 (AKADEMIA ROLNICZA) 15-10-1976 * Abstract * | 1,2 | |
| Y | CHEMICAL ABSTRACTS, vol. 87, no. 14, 3rd October 1977, page 30, no. 103073b, Columbus, Ohio, US & PL - A - 85 450 (AKADEMIA TOLNICZA) 15-09-1976 * Abstract * | 1,2 | |
| A | EP-A-0 013 447 (METHANOL CHEMIE NEDERLAND) * Page 1, lines 14-22; example 1; table; claims 1-3 * | 1,3,4 7 | **TECHNICAL FIELDS SEARCHED (Int. Cl. ³)** C 08 L C 09 J |
| A | EP-A-0 062 389 (METHANOL CHEMIE NEDERLAND) * Example 3; claims * | 1,7-9 | |
| A | GB-A-2 019 854 (AKTIEBOLAGET CASCO) * Page 3, lines 5-10; examples IA,IB; claims 1,4-7 * | 1-4 | |

The present search report has been drawn up for all claims

| Place of search THE HAGUE | Date of completion of the search 24-01-1984 | Examiner FLETCHER A.S. |
|---|---|---|